# EUROPÄISCHE PATENTSCHRIFT

(11) **EP 3 101 363 B1**
(45) Veröffentlichungstag und Bekanntmachung des Hinweises auf die Patenterteilung: **13.11.2019**
(21) Anmeldenummer: 15170058.0
(22) Anmeldetag: 01.06.2015
(51) Int. Cl.: F24F 13/14, A62C 2/06, A62C 2/12, E04B 1/94, E06B 5/16, F16L 5/04

(54) **ABSPERRKLAPPE FÜR DEN EINSATZ IN EINEM KANAL EINER RAUMLUFTTECHNISCHEN ANLAGE ODER EINER MASCHINELLEN ENTRAUCHUNGSANLAGE**
SHUTOFF VALVE FOR USE IN A CONDUIT OF AN AIR CONDITIONING SYSTEM OR A MECHANICAL SMOKE VENTILATION ASSEMBLY
CLAPET DE FERMETURE DESTINÉ À ÊTRE UTILISÉ DANS UN CANAL D'UNE INSTALLATION DE VENTILATION OU D'UNE INSTALLATION DE DÉSENFUMAGE MÉCANIQUE

(43) Veröffentlichungstag der Anmeldung: 07.12.2016
(73) Patentinhaber: TROX GmbH, 47506 Neukirchen-Vluyn (DE)
(72) Erfinder: Mosters, Martin, 46519 Alpen (DE); Fels, Martin, 46459 Rees (DE)
(74) Vertreter: Dr. Stark & Partner Patentanwälte mbB

(56) Entgegenhaltungen:
- EP-A1- 1 960 060
- EP-A1- 2 412 409
- EP-A2- 1 132 563
- BE-A5- 1 018 652
- DE-U1-202014 007 432
- GB-A- 2 259 249

## Beschreibung

Die Erfindung betrifft eine Absperrklappe für den Einsatz in einem Kanal einer raumlufttechnischen Anlage oder einer maschinellen Entrauchungsanlage, wobei die Absperrklappe ein, insbesondere einen viereckigen Querschnitt aufweisendes, Gehäuse mit einer Gehäusewandung und eine in dem Gehäuse um eine, insbesondere mittig auf den Gehäusequerschnitt bezogen angeordnete, Schwenkachse zwischen einer Offenstellung und einer Schließstellung schwenkbar gelagerte Klappe mit einer umlaufenden, lediglich durch die Schwenkachse unterbrochenen Kante, umfasst, wobei in dem Gehäuse zumindest eine Durchführung für die Schwenkachse vorgesehen ist, wobei außenseitig auf der Kante eine Dichtung vorgesehen ist und wobei die Klappe unter Bildung eines in der Schließstellung der Klappe verbleibenden Spaltes zwischen der Kante der Klappe und der Innenseite des Gehäuses kleiner als die Querschnittsfläche des Gehäuses ausgebildet ist und die Dichtung in der Schließstellung der Klappe den Spalt abdichtet.

Absperrklappen sollen in ihrer Schließstellung den Strömungsquerschnitt abschließen und so ein Strömen eines Mediums verhindern. Zur Definition der Schließstellung kann in dem Gehäuse ein Anschlag vorgesehen sein, an dem die Klappe in ihrer Schließstellung anliegt. Absperrklappen, insbesondere wenn sie als Brandschutz- oder Entrauchungsklappe ausgebildet sind, stellen eine sicherheitsrelevante Komponente dar, so dass beispielsweise im Falle eines Brandes der Strömungsquerschnitt hinreichend abgedichtet sein muss. Bekannte Dichtungen gewähren nicht in jeder Situation eine hinreichende Abdichtung.

Aus der DE 20 2014 007 432 U1 ist eine Brandschutz- und Entrauchungseinrichtung für Lüftungsanlagen bekannt, die einen Dichtungsabschnitt aus Intumeszenzmaterial aufweist, dem beidseitig jeweils ein Dichtungsabschnitt aus Nichtintumeszenzmaterial zugeordnet ist. Die aus der EP 1 960 060 A0 bekannte Brandschutzklappe weist eine Dichtung sowie eine Außenkantendichtung aus einem Brandschutzdichtmaterial auf, das mit einem feuerfesten Dichtmaterial überdeckt ist. Die BE 1018652 A5 zeigt eine Brandabsperrvorrichtung, bei der eine expandierende Dichtung auf der Kante der Klappe angebracht ist und wobei die expandierende Dichtung von einer Dichtung aus Silikon überdeckt wird. Die BE 1018652 A5 offenbart damit eine Absperrklappe mit den Merkmalen des Oberbegriffs von Anspruch 1. Die EP 2 412 409 A1 beschreibt eine durch eine Silikonbeschichtung umgebende intumeszierende Dichtung.

Aufgabe der Erfindung ist es, die vorgenannten Nachteile zu vermeiden und eine Absperrklappe anzugeben, die eine sichere Abdichtung des Strömungsquerschnittes in der Schließstellung der Klappe gewährleistet.

Diese Aufgabe wird dadurch gelöst, dass die Dichtung eine Kaltdichtung und eine sich bei Wärmeeinwirkung ausdehnende, intumeszierende Warmdichtung aufweist, wobei zumindest die Kaltdichtung gegenüber der Kante der Klappe hervorsteht und wobei auf der Kante auf beiden Seiten der Kaltdichtung, jeweils eine - insbesondere unmittelbar an die Kaltdichtung angrenzende, d.h. mit der Kaltdichtung in Kontakt befindliche - Warmdichtung angeordnet ist. Im einfachsten Fall kann die Dichtung beispielsweise auf die Kante der Klappe aufgeklebt oder aufgeschraubt sein. Selbstverständlich ist es aber auch möglich, dass in der Kante eine nutenförmige Ausnehmung vorgesehen ist, in die die Dichtung entsprechend fixierbar ist.

Die erfindungsgemäße Absperrklappe zeichnet sich dadurch aus, dass nur noch eine Dichtung auf der Kante der Klappe erforderlich ist und - sofern beispielsweise auf der Innenseite des Gehäuses ein Anschlag zur Definition der Schließstellung vorgesehen ist - keine Anschlagdichtung mehr erforderlich ist. Dies führt zu einer Reduzierung der Bauteile. Die erfindungsgemäße Dichtung gewährleistet insoweit sowohl eine Kaltabdichtung durch die Kaltdichtung als auch im Falle einer Temperaturentwicklung eine Warmabdichtung durch die Warmdichtung.

Die Kaltdichtung kann beispielsweise aus einem nicht brennbaren mineralfaserhaltigen, insbesondere als Mineralfaserschaumstoff ausgebildeten, Material bestehen.

Die durch Wärmeeinwirkung ausdehnende, intumeszierende Warmdichtung kann beispielsweise pulverisiertes Graphit, einen Polymer-Compound und Kunstharz umfassen. Ein Polymer-Compound stellt ein Polymer dar, welches mit bestimmten chemischen Bestandteilen versetzt ist, die beim Schmelzen unter Temperatureinfluss freigesetzt werden und dann mit dem Graphit eine chemische Reaktion eingehen. Bei dieser chemischen Reaktion bilden sich lange Molekülketten, die die gewünschte Volumenänderung hervorrufen. Die Aufgabe des Harzes ist es, ein Abtropfen der Mischung im Brandfall zu verhindern. Üblicherweise soll ein Aufschäumen des Materials bei einer Temperatur von etwa 160°C erfolgen.

Die Klappe kann beispielsweise aus einem zementgebundenen Kalzium-Silikat-Material, wie beispielsweise einer Brandschutzbauplatte, bestehen.

Die Warmdichtung kann streifenförmig ausgebildet sein. Kommt es zu einer Temperaturentwicklung, schäumt das Material entsprechend auf.

Die Kaltdichtung kann als Hohlprofildichtung, insbesondere als eine einen runden oder halbkreisförmigen Querschnitt aufweisende Hohlprofildichtung, ausgebildet sein. Selbstverständlich sind auch andere Querschnittsformen denkbar.

Es bietet sich an, wenn die Kaltdichtung aus einem thermoplastischen Elastomer (TPE) besteht.

Um die Reibung beim Verschwenken der Klappe, insbesondere beim Verschwenken aus ihrer Offenstellung in die Schließstellung, gegenüber der Innenseite des Gehäuses so gering wie möglich zu halten, kann die Kaltdichtung auf ihrer Oberseite zumindest in dem in der Schließstellung mit der Innenseite des Gehäuses in Kontakt befindlichen Bereich wenigstens einen, sich zumindest über einen Teilbereich der Kaltdichtung, vorzugsweise sich über die komplette Länge der Kaltdichtung, erstreckenden, insbesondere aus Polypropylen (PP) bestehenden, Gleitstreifen aufweisen.

Es bietet sich an, wenn die Dichtung zur Befestigung an der Klappe auf ihrer der Klappe zugewandten Seite einen sich zumindest über einen Teilbereich der Dichtung, vorzugweise sich über die ganze Länge der Dichtung, erstreckenden, insbesondere aus Polypropylen (PP) bestehenden, Steg aufweisen, der in eine in der Kante der Klappe vorgesehene Nut einführbar ist. Dies erlaubt eine einfache Befestigung der Dichtung an der Klappe, da der Steg lediglich in die Nut eingeführt werden muss. Der Steg kann beispielsweise mit der Kaltdichtung der Dichtung verbunden sein.

Es bietet sich an, wenn der Steg an seinem der Dichtung zugewandten Ende einen, insbesondere aus Polypropylen (PP) bestehenden, Montagebereich für die Befestigung weiterer Bestandteile der Dichtung, wie z.B. der Kaltdichtung, aufweist.

Der Steg kann zumindest eine seitlich vorstehende, insbesondere aus einem thermoplastischen Elastomer (TPE) bestehende, Rastnase aufweisen. Vorzugsweise sind beidseits des Stegs entsprechende Rastnasen vorgesehen, so dass dem Steg eine Art Tannenprofil zukommt.

Die Dichtung kann als extrudiertes Bauteil ausgebildet sein. Bei einer solchen Ausgestaltung handelt es sich insoweit um eine koextrudierte Dichtung bestehend aus einer Kaltdichtung und zumindest einer Warmdichtung.

Die Dichtung kann einteilig ausgebildet sein. Bei einer solchen Ausgestaltung ist jede Warmdichtung fest mit der Kaltdichtung verbunden, so dass die Dichtung als Ganzes an der Klappe befestigt und entfernt werden kann. Die einteilige Ausgestaltung schließt nicht aus, dass die Kaltdichtung und die Warmdichtung(en) aus unterschiedlichen Materialien bestehen.

Die Absperrklappe kann als Entrauchungsklappe ausgebildet sein. Entrauchungsklappen dienen dazu, Bereiche in einem Gebäude, beispielsweise einen Fluchtbereich, rauchfrei zu halten. Der Einsatzbereich einer Entrauchungsklappe ist bei einer Temperatur, die zwischen der Umgebungstemperatur des jeweils rauchfrei zu haltenden Bereichs (Kaltentrauchung) und einer Temperatur von bis zu 1000°C oder mehr (Heißentrauchung) liegt. Insoweit müssen Entrauchungsklappen zum einen eine Kaltabdichtung und zum anderen eine Warmabdichtung gewährleisten. Aufgrund der eventuell hohen Temperaturen bestehen üblicherweise das Gehäuse, die Klappe, die Anschläge und die auf der Außenseite des Gehäuses angeordnete Motorenkapselung der Antriebseinrichtung aus Calciumsilikat. Entrauchungsklappen werden üblicherweise durch einen Rauchmelder ausgelöst. Selbstverständlich sind auch andere Auslöseeinrichtungen, wie z. B. eine Handauslöseeinrichtung, eine Fernauslöseeinrichtung oder dergleichen, denkbar. Die Energie zum Öffnen und zum Schließen muss dauerhaft an der Klappe anliegen. Entrauchungsklappen sind so ausgelegt, dass auch nach dem Auslösen, d.h. nach einem Verschwenken aus der Offenstellung in die Schließstellung, ein anschließendes Öffnen, d.h. ein Verschwenken in die Offenstellung, gewährleistet ist. Selbstverständlich gilt dies auch für den umgekehrten Fall.

Die Absperrklappe kann auch als Brandschutzklappe ausgebildet sein. Brandschutzklappen weisen üblicherweise ein Gehäuse aus Metall auf, in dem eine aus Calciumsilikat bestehende Klappe schwenkbar gelagert ist. Eine Brandschutzklappe kann beispielsweise manuell betätigbar sein. Die Klappe ist gegen eine Rückstellkraft aus ihrer Schließstellung in ihre Offenstellung verlagerbar und in ihrer Offenstellung durch eine Fixier- und Auslöseeinrichtung fixierbar. Für das Verschwenken der Klappe aus ihrer Schließstellung gegen die Rückstellkraft in die Offenstellung, d.h. zum Spannen der Feder, ist üblicherweise ein vorzugsweise auf der Außenseite des Gehäuses angeordnetes Betätigungselement, wie z. B. ein Betätigungsgriff, vorgesehen. Die Klappe wird mittels einer Fixiereinrichtung gegen eine Rückstellkraft in ihrer Offenstellung fixiert. Beispielsweise im Brandfall, d.h. wenn die Temperatur einen Wert von etwa 72°C übersteigt, wird die Klappe aus der fixierten Position nach Auslösen einer Auslöseeinrichtung, beispielsweise einem Schmelzlot, durch die Rückstellkraft, die von der Feder bereitgestellt wird, aus ihrer Offenstellung in ihre Schließstellung verschwenkt. Gleichzeitig bläht sich das intumeszierende Material, d.h. das die aus einem bei Wärme ausdehnende bzw. aufschäumende Material der Warmdichtung, auf. Das intumeszierende Material füllt nunmehr einen eventuell noch bestehenden Spalt zwischen der Kante der Klappe und der Innenseite des Gehäuses vollständig aus, so dass der Spalt abgedichtet ist. Die Klappe kann nunmehr nicht mehr geöffnet werden und muss später ausgetauscht werden. Selbstverständlich sind als Auslöseeinrichtungen auch andere Ausgestaltungen, wie beispielsweise ein elektrisches Schmelzlot, denkbar.

Selbstverständlich kann die Absperrklappe auch als kombinierte Brandschutz- und als Entrauchungsklappe ausgebildet sein.

Es bietet sich an, wenn an der Klappe mittelbar oder unmittelbar eine Antriebseinrichtung angreift. Damit kann die Klappe motorisch in die gewünschte Stellung verfahren werden.

Sofern es sich um eine Brandschutzklappe handelt, ist die Antriebseinrichtung beispielsweise als Federrücklaufmotor ausgebildet. Beim Öffnen der Klappe wird eine Feder in dem Federrücklaufmotor gespannt. Im Brandfall bewirkt eine thermoelektrische Auslöseeinrichtung, bei der es sich beispielsweise um ein elektrisches Schmelzlot handeln kann, eine Spannungsunterbrechung. Damit kann der Federrücklaufmotor der durch die gespannte Feder erzeugten Rückstellkraft nicht mehr entgegenwirken, so dass die Klappe durch die von der Feder aufgebrachte Rückstellkraft geschlossen wird.

Soweit eine Entrauchungsklappe eine motorische Antriebseinrichtung umfasst, ist sowohl für ein Verschwenken der Klappe aus der Offenstellung in ihre Schließstellung als auch für ein Verschwenken der Klappe aus der Schließstellung in ihre Offenstellung eine anliegende Spannung erforderlich.

Im Folgenden werden in den Zeichnungen dargestellte Ausführungsbeispiele der Erfindung erläutert. Es zeigen:
- Fig. 1: eine schräge Draufsicht auf eine teilweise geschnitten dargestellte Absperrklappe mit rechteckigem Querschnitt,
- Fig. 2: ein erstes Ausführungsbeispiel einer Dichtung,
- Fig. 3: eine schräge Draufsicht auf den Bereich der Kante einer Klappe mit einer darin befestigten Dichtung gemäß Fig. 2,
- Fig. 4: einen Schnitt durch den Gegenstand nach Fig. 3,
- Fig. 5: ein zweites Ausführungsbeispiel einer Dichtung,
- Fig. 6: eine schräge Draufsicht auf den Bereich der Kante einer Klappe mit einer darin befestigten Dichtung gemäß Fig. 5 und
- Fig. 7: einen Schnitt durch den Gegenstand nach Fig. 6.

In allen Figuren werden für gleiche bzw. gleichartige Bauteile übereinstimmende Bezugszeichen verwendet.

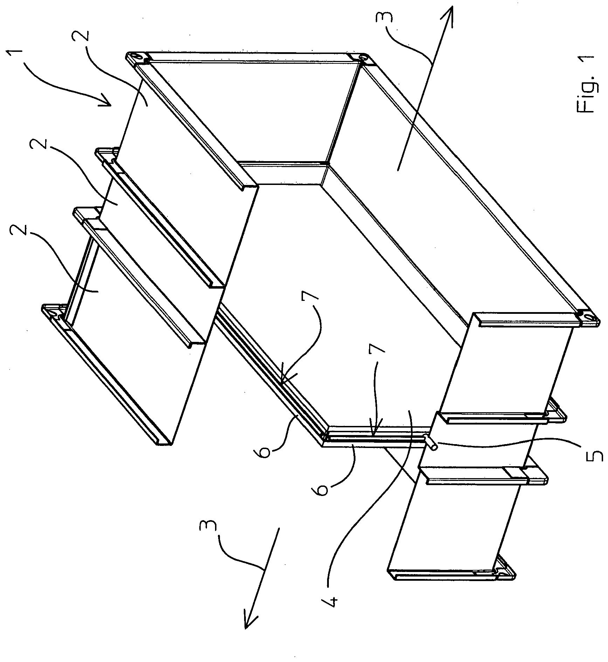

Fig. 1 zeigt eine Absperrklappe für den Einsatz in einem Kanal einer raumlufttechnischen Anlage, wobei die Absperrklappe ein Gehäuse 1 mit einem viereckigen Querschnitt aufweist. Das Gehäuse 1 weist eine Gehäusewandung 2 auf. In dem dargestellten Ausführungsbeispiel ist die Absperrklappe in Strömungsrichtung 3 gesehen dreiteilig ausgebildet, d.h. sie besteht aus drei Segmenten, wobei benachbarte Segmente über eine Flanschverbindung miteinander verbunden sind. Selbstverständlich ist es auch möglich, dass die Absperrklappe in Strömungsrichtung 3 gesehen nur ein Segment aufweist. Jede Gehäusewandung 2 eines Segmentes besteht in dem dargestellten Ausführungsbeispiel aus vier Gehäusewandungsbereichen.

Ferner ist in dem Gehäuse eine Klappe 4 vorgesehen, die um eine bezogen auf den Querschnitt des Gehäuses 1 mittig angeordnete Schwenkachse 5 zwischen einer Offenstellung und einer Schließstellung schwenkbar gelagert ist. In dem Gehäuse 1 ist auf jeder Seite eine Durchführung für die Schwenkachse 5 vorgesehen.

Die Klappe 4 weist eine umlaufende Kante 6 auf. Außenseitig auf der Kante 6 der Klappe 4 ist eine Dichtung 7 vorgesehen, die lediglich durch die Schwenkachse 5 unterbrochen ist. In der Schließstellung der Klappe 4 verbleibt ein Spalt zwischen der Kante 6 der Klappe 4 und der Innenseite des Gehäuses 1, da die Klappe 4 kleiner als die Querschnittsfläche des Gehäuses 1 ausgebildet ist.

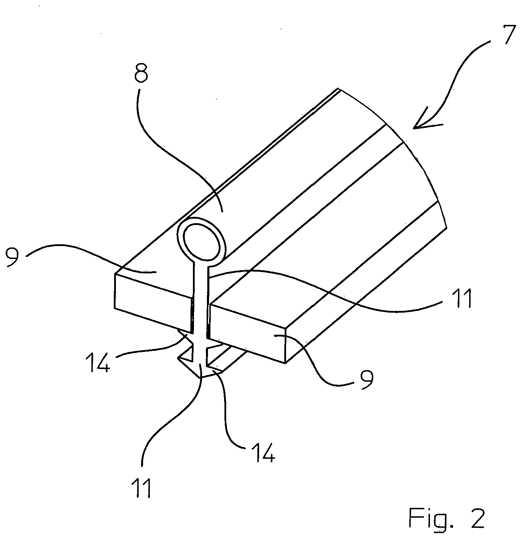

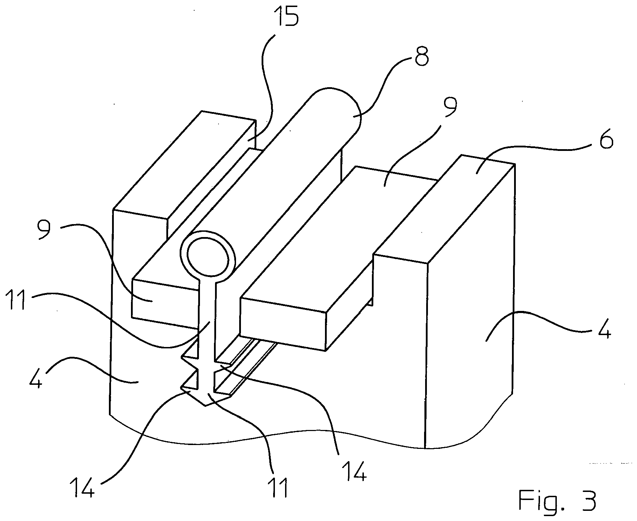

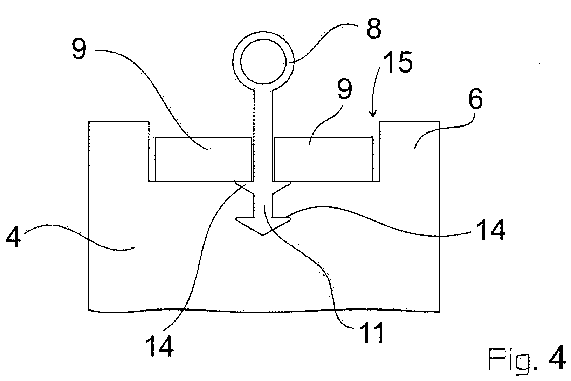

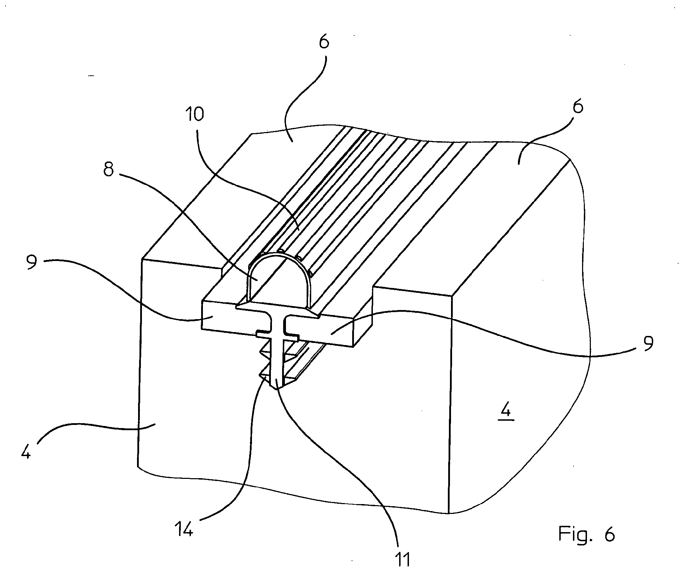

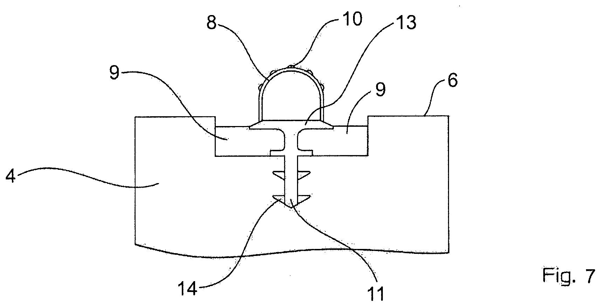

Wie den Fig. 2 bis 7 zu entnehmen ist, besteht die Dichtung 7 aus einer Kaltdichtung 8 und zwei sich bei Wärmeeinwirkung ausdehnenden Warmdichtungen 9. Die Kaltdichtung 8 steht gegenüber der Kante 6 der Klappe 4 deutlich hervor, so dass hierdurch in der Schließstellung der Klappe 4 der Spalt abgedichtet wird. Die beiden Warmdichtungen 9 sind jeweils streifenförmig ausgebildet.

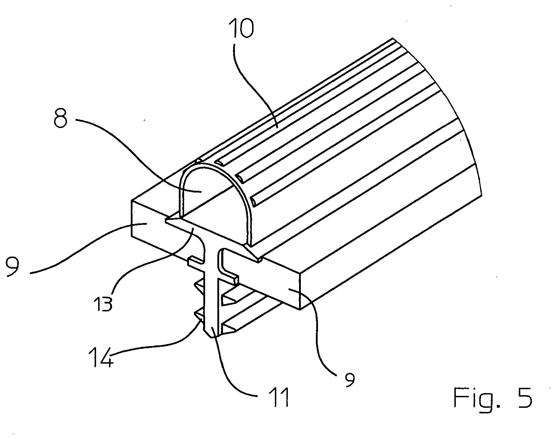

In allen Figuren ist die Kaltdichtung 8 als Hohlprofildichtung ausgebildet, wobei in den Fig. 2 bis 4 die Hohlprofildichtung einen runden und in den Fig. 5 bis 7 einen halbkreisförmigen Querschnitt aufweist. Die Kaltabdichtung 8 kann aus einem thermoplastischen Elastomer bestehen.

Bei dem Ausführungsbeispiel nach den Fig. 5 bis 7 weist die Kaltdichtung 8 auf ihrer Oberseite in dem in der Schließstellung mit der Innenseite des Gehäuses 1 in Kontakt befindlichen Bereich mehrere sich über die komplette Länge der Kaltdichtung 8 erstreckende, insbesondere aus Polypropylen (PP) bestehende, Gleitstreifen 10 auf.

In den Ausführungsbeispielen weist die Dichtung 7 zur Befestigung an der Klappe 4 auf ihrer der Klappe 4 zugewandten Seite eine sich über die ganze Länge der Dichtung 7 erstreckenden Steg 11 auf, der in eine in der Kante 6 der Klappe 4 vorgesehene Nut 12 einführbar ist.

Bei dem Ausführungsbeispiel nach den Figuren 5 bis 7 ist zusätzlich an dem Steg 11 ein Montagebereich 13 vorgesehen, an dem die Kaltdichtung 8 befestigt ist. Der Montagebereich 13 liegt randseitig auf der jeweils angrenzenden Warmdichtung 9 oberseitig auf.

Der Steg 11 weist in den dargestellten Ausführungsbeispielen beidseitig jeweils zwei durchgehende Rastnasen 14, die beispielsweise aus einem thermoplastischen Elastomer bestehen, auf. Damit kommt dem Steg 11 eine Art Tannenprofil zu. Die Rastnasen 14 verhindern ein unbeabsichtigtes Lösen des in die Nut 12 eingesteckten Steges 11.

In allen Ausführungsbeispielen ist in der Kante 6 eine Ausnehmung 15 vorgesehen, deren Breite etwas größer als die Breite der Dichtung 7 ist. Die Höhe der Ausnehmung 15 ist so gewählt, dass die Dicke der beiden Warmdichtungen 9 etwas geringer ist, so dass lediglich die Kaltdichtung 8 gegenüber der Kante 6 vorsteht.

Bei dem in den Figuren dargestellten Ausführungsbeispiel ist die Dichtung 7, d.h. die Kaltdichtung 8 und die beiden Warmdichtungen 9, einteilig und als extrudiertes Bauteil ausgebildet.

## Patentansprüche

1. Absperrklappe für den Einsatz in einem Kanal einer raumlufttechnischen Anlage oder einer maschinellen Entrauchungsanlage, wobei die Absperrklappe ein, insbesondere einen viereckigen Querschnitt aufweisendes, Gehäuse (1) mit einer Gehäusewandung (2) und eine in dem Gehäuse (1) um eine, insbesondere mittig auf den Gehäusequerschnitt bezogen angeordnete, Schwenkachse (5) zwischen einer Offenstellung und einer Schließstellung schwenkbar gelagerte Klappe (4) mit einer umlaufenden, lediglich durch die Schwenkachse (5) unterbrochenen Kante (6), umfasst, wobei in dem Gehäuse (1) zumindest eine Durchführung für die Schwenkachse (5) vorgesehen ist, wobei außenseitig auf der Kante (6) eine Dichtung (7) vorgesehen ist und wobei die Klappe (4) unter Bildung eines in der Schließstellung der Klappe (4) verbleibenden Spaltes zwischen der Kante (6) der Klappe (4) und der Innenseite des Gehäuses (1) kleiner als die Querschnittsfläche des Gehäuses (1) ausgebildet ist und die Dichtung (7) in der Schließstellung der Klappe (4) den Spalt abdichtet, wobei die Dichtung (7) eine Kaltdichtung (8) und eine sich bei Wärmeeinwirkung ausdehnende, intumeszierende Warmdichtung (9) aufweist, wobei zumindest die Kaltdichtung (8) gegenüber der Kante (6) der Klappe (4) hervorsteht, **dadurch gekennzeichnet, dass** auf der Kante (6) auf beiden Seiten der Kaltdichtung (8), jeweils eine Warmdichtung (9) angeordnet ist.

2. Absperrklappe nach dem vorhergehenden Anspruch, **dadurch gekennzeichnet, dass** die Warmdichtung (9) streifenförmig ausgebildet ist.

3. Absperrklappe nach einem der vorhergehenden Ansprüche, **dadurch gekennzeichnet, dass** die Kaltdichtung (8) als Hohlprofildichtung, insbesondere als eine einen runden oder halbkreisförmigen Querschnitt aufweisende Hohlprofildichtung, ausgebildet ist.

4. Absperrklappe nach einem der vorhergehenden Ansprüche, **dadurch gekennzeichnet, dass** die Kaltdichtung (8) aus einem thermoplastischen Elastomer (TPE) besteht.

5. Absperrklappe nach einem der vorhergehenden Ansprüche, **dadurch gekennzeichnet, dass** die Kaltdichtung (8) auf ihrer Oberseite zumindest in dem in der Schließstellung mit der Innenseite des Gehäuses (1) in Kontakt befindlichen Bereich wenigstens einen, sich zumindest über einen Teilbereich der Kaltdichtung (8), vorzugsweise sich über die komplette Länge der Kaltdichtung (8), erstreckenden, insbesondere aus Polypropylen (PP) bestehenden, Gleitstreifen (10) aufweist.

6. Absperrklappe nach einem der vorhergehenden Ansprüche, **dadurch gekennzeichnet, dass** die Dichtung (7) zur Befestigung an der Klappe (4) auf ihrer der Klappe (4) zugewandten Seite einen sich zumindest über einen Teilbereich der Dichtung (7), vorzugweise sich über die ganze Länge der Dichtung (7), erstreckenden, insbesondere aus Polypropylen (PP) bestehenden, Steg (11) aufweist, der in eine in der Kante (6) der Klappe (4) vorgesehene Nut (12) einführbar ist.

7. Absperrklappe nach dem vorhergehenden Anspruch, **dadurch gekennzeichnet, dass** der Steg (11) an seinem der Dichtung (7) zugewandten Ende einen, insbesondere aus Polypropylen (PP) bestehenden, Montagebereich (13) für die Befestigung der Kaltdichtung (8) aufweist.

8. Absperrklappe nach einem Ansprüche 6 oder 7, **dadurch gekennzeichnet, dass** der Steg (11) zumindest eine seitlich vorstehende, insbesondere aus einem thermoplastischen Elastomer (TPE) bestehende, Rastnase (14) aufweist.

9. Absperrklappe nach einem der vorhergehenden Ansprüche, **dadurch gekennzeichnet, dass** die Dichtung (7) als extrudiertes Bauteil ausgebildet ist.

10. Absperrklappe nach einem der vorhergehenden Ansprüche, **dadurch gekennzeichnet, dass** die Dichtung (7) einteilig ausgebildet ist.

11. Absperrklappe nach einem der vorhergehenden Ansprüche, **dadurch gekennzeichnet, dass** die Absperrklappe als Entrauchungsklappe ausgebildet ist.

12. Absperrklappe nach einem der Ansprüche 1 bis 10, **dadurch gekennzeichnet, dass** die Absperrklappe als Brandschutzklappe ausgebildet ist.

13. Absperrklappe nach dem vorhergehenden Anspruch, **dadurch gekennzeichnet, dass** die Klappe (4) mittels einer Fixiereinrichtung gegen eine Rückstellkraft in ihrer Offenstellung fixierbar ist und aus der fixierten Position, beispielsweise im Brandfall, nach Lösen der Fixiereinrichtung durch die Rückstellkraft in ihre Schließstellung verschwenkbar ist.

14. Absperrklappe nach einem der vorhergehenden Ansprüche, **dadurch gekennzeichnet, dass** an der Klappe (4) mittelbar oder unmittelbar eine Antriebseinrichtung angreift.

## Claims

1. Shutoff valve for use in a conduit of an air conditioning system or a mechanical smoke ventilation assembly, wherein the shutoff valve comprises a housing (1), exhibiting in particular a rectangular cross-section, with a housing wall (2) and a flap (4), arranged in the housing (1), arranged in particular centrally in relation to the housing cross-section, capable of pivoting about a pivot axle (5) between an open position and a closed position, with a circumferential edge (6) which is interrupted only by the pivot axle (5), wherein at least one passage opening for the pivot axle (5) is provided in the housing (1), wherein a seal (7) is provided on the outside on the edge (6), and wherein the flap (4), with the formation of a gap between the edge (6) of the flap (4) and the inner side of the housing (1), which remains in the closed position of the flap (4), is configured as smaller than the cross-section surface area of the housing (1), and the seal (7), in the closed position of the flap (4), seals the gap, wherein the seal (7) comprises a cold seal (8) and an intumescing hot seal (9) which expands under the effect of heat, wherein at least the cold seal (8) projects opposite the edge (6) of the flap (4), **characterised in that** a hot seal (9) is arranged in each case on the edge (6) on both sides of the cold seal (8).

2. Shutoff valve according to the preceding claim, **characterised in that** the hot seal (9) is configured in the form of a strip.

3. Shutoff valve according to any one of the preceding claims, **characterised in that** the cold seal (8) is configured as a hollow profile seal, in particular as a hollow profile seal exhibiting a circular or semicircular cross-section.

4. Shutoff valve according to any one of the preceding claims, **characterised in that** the cold seal (8) consists of a thermoplastic elastomer (TPE).

5. Shutoff valve according to any one of the preceding claims, **characterised in that** the cold seal (8) comprises on its upper side, at least in the region which in the closed position is in contact with inner side of the housing (1), at least one sliding strip (10), extending at least over a part region of the cold seal (8), and preferably over the entire length of the cold seal (8), consisting in particular of polypropylene (PP).

6. Shutoff valve according to any one of the preceding claims, **characterised in that** the seal (7), for securing to the flap (4), comprises on its side facing towards the flap (4) a web (11), extending at least over a part region of the seal (7) and preferably over the entire length of the seal (7), consisting in particular of polypropylene (PP), which can be introduced into a slot (12) provided in the edge (6) of the flap (4).

7. Shutoff valve according to the preceding claims, **characterised in that** the web (11) exhibits at its end facing towards the seal (7) an assembly region (13), consisting in particular of polypropylene (PP), for securing the cold seal (8).

8. Shutoff valve according to one of claims 6 or 7, **characterised in that** the web (11) comprises at least one engagement nose (14), projecting laterally, consisting in particular of a thermoplastic elastomer (TPE).

9. Shutoff valve according to any one of the preceding claims, **characterised in that** the seal (7) is configured as an extruded component.

10. Shutoff valve according to any one of the preceding claims, **characterised in that** the seal (7) is configured as a single piece.

11. Shutoff valve according to any one of the preceding claims, **characterised in that** the shutoff valve is configured as a smoke extraction flap.

12. Shutoff valve according to any one claims 1 to 10, **characterised in that** the shutoff valve is configured as a fire protection flap.

13. Shutoff valve according to preceding claim, **characterised in that** the flap (4) can be fixed in its open position by means of a fixing device against a resetting force, and can be pivoted out of the fixed position, for example in the event of fire, after the release of the fixing device, into its closed position by means of the resetting force.

14. Shutoff valve according to any one of the preceding claims, **characterised in that** a drive device engages at the flap (4), indirectly or directly.

## Revendications

1. Clapet de fermeture destiné à être utilisé dans un conduit d'une installation de ventilation ou d'une installation de désenfumage mécanique, le clapet de fermeture comportant un boîtier (1), présentant en particulier une section transversale quadrangulaire, doté d'une paroi de boîtier (2) et un clapet (4) monté dans le boîtier (1) de manière à pouvoir pivoter entre une position ouverte et une position fermée autour d'un axe de pivotement (5) disposé en particulier centralement par rapport à la section transversale de boîtier, lequel clapet est doté d'un bord (6) périphérique interrompu seulement par l'axe de pivotement (5), au moins un passage pour l'axe de pivotement (5) étant prévu dans le boîtier (1), un joint d'étanchéité (7) étant prévu sur le bord (6) du côté extérieur, et le clapet (4) étant formé de manière à être plus petit que l'aire en section transversale du boîtier (1) en formant un interstice, demeurant dans la position fermée du clapet (4), entre le bord (6) du clapet (4) et le côté intérieur du boîtier (1), et le joint d'étanchéité (7) fermant hermétiquement l'interstice dans la position fermée du clapet (4), le joint d'étanchéité (7) comprenant un joint d'étanchéité à froid (8) et un joint d'étanchéité à chaud (9) intumescent se dilatant sous l'effet de la chaleur, au moins le joint d'étanchéité à froid (8) faisant saillie par rapport au bord (6) du clapet (4), **caractérisé en ce qu'** un joint d'étanchéité à chaud (9) est disposé respectivement sur le bord (6) des deux côtés du joint d'étanchéité à froid (8).

2. Clapet de fermeture selon la revendication précédente, **caractérisé en ce que** le joint d'étanchéité à chaud (9) est réalisé en forme de bande.

3. Clapet de fermeture selon l'une des revendications précédentes, **caractérisé en ce que** le joint d'étanchéité à froid (8) est réalisé sous forme de joint d'étanchéité profilé creux, en particulier sous forme de joint d'étanchéité profilé creux présentant une section transversale ronde ou semi-circulaire.

4. Clapet de fermeture selon l'une des revendications précédentes, **caractérisé en ce que** le joint d'étanchéité à froid (8) est constitué d'un élastomère thermoplastique (TPE).

5. Clapet de fermeture selon l'une des revendications précédentes, **caractérisé en ce que** le joint d'étanchéité à froid (8) comprend sur son côté supérieur, au moins dans la région se trouvant en contact avec le côté intérieur du boîtier (1) dans la position fermée, au moins une bande de glissement (10) s'étendant au moins sur une région partielle du joint d'étanchéité à froid (8), de préférence sur toute la longueur du joint d'étanchéité à froid (8) et constituée en particulier de polypropylène (PP).

6. Clapet de fermeture selon l'une des revendications précédentes, **caractérisé en ce que** le joint d'étanchéité (7) comprend, pour la fixation au clapet (4), sur son côté tourné vers le clapet (4), un élément jointif (11) s'étendant au moins sur une région partielle du joint d'étanchéité (7), de préférence sur toute la longueur du joint d'étanchéité (7) et constitué en particulier de polypropylène (PP), lequel élément jointif peut être inséré dans une rainure (12) prévue dans le bord (6) du clapet (4).

7. Clapet de fermeture selon la revendication précédente, **caractérisé en ce que** l'élément jointif (11) comprend, à son extrémité tournée vers le joint d'étanchéité (7), une région de montage (13) constituée en particulier de polypropylène (PP) pour la fixation du joint d'étanchéité à froid (8).

8. Clapet de fermeture selon la revendication 6 ou 7, **caractérisé en ce que** l'élément jointif (11) comprend au moins un ergot d'encliquetage (14) faisant saillie latéralement et constitué en particulier d'un élastomère thermoplastique (TPE).

9. Clapet de fermeture selon l'une des revendications précédentes, **caractérisé en ce que** le joint d'étanchéité (7) est réalisé sous forme de composant extrudé.

10. Clapet de fermeture selon l'une des revendications précédentes, **caractérisé en ce que** le joint d'étanchéité (7) est réalisé d'une seule pièce.

11. Clapet de fermeture selon l'une des revendications précédentes, **caractérisé en ce que** le clapet de fermeture est réalisé sous forme de clapet de désenfumage.

12. Clapet de fermeture selon l'une des revendications 1 à 10, **caractérisé en ce que** le clapet de fermeture est réalisé sous forme de clapet coupe-feu.

13. Clapet de fermeture selon la revendication précédente, **caractérisé en ce que** le clapet (4) peut être, au moyen d'un dispositif de fixation, fixé dans sa position ouverte à l'encontre d'une force de rappel et peut être pivoté à partir de la position fixée, par exemple en cas d'incendie, dans sa position fermée par la force de rappel après le déblocage du dispositif de fixation.

14. Clapet de fermeture selon l'une des revendications précédentes, **caractérisé en ce qu'**un dispositif d'entraînement agit directement ou indirectement sur le clapet (4).
